# EUROPEAN PATENT APPLICATION

(11) **EP 1 081 534 A1**
(43) Date of publication of application: **07.03.2001**
(21) Application number: 99910675.0
(22) Date of filing: 24.03.1999
(51) Int. Cl.: G02F 1/1335, G02B 5/30

(54) **LIQUID CRYSTAL DISPLAY**

(30) Priority: 24.03.1998 JP 7516198
(71) Applicant: Nippon Mitsubishi Oil Corporation, Tokyo 105-0003 (JP)
(72) Inventor: TOYOOKA, Takehiro, Nippon Mitsubishi Oil Corp., Kanagawa 231-0815 (JP); UESAKA, Tetsuya, Nippon Mitsubishi Oil Corp., Kanagawa 231-0815 (JP)
(74) Representative: Colmer, Stephen Gary
(86) International application number: JP9901480
(87) International publication number: WO9949359

(57) **Abstract**

The present invention provides a liquid crystal display comprising at least one compensation film having retardation in the face of the film, a driving twisted nematic liquid crystal cell composed of a pair of transparent substrates provided with electrodes and nematic liquid crystal sandwiched between the substrates, and two polarizing plates arranged on the upper and lower sides of the liquid crystal cell, wherein the absorption axis or transmission axis of the polarizing plate is approximately parallel to the direction of orientation of the liquid crystal molecule on the liquid crystal cell substrate to which the polarizing plate is closest, and the angle between the slow axis bearing in the face of the compensation film and the absorption axis or transmission axis of the polarizing plate is in the range of 0.1 to 10° .

## Description

### Field of the Invention

The present invention relates to a twisted nematic liquid crystal display with improvements in viewing angle characteristics of contrast ratio, gray scale characteristics, color shift, and contrast ratio for normal incidence.

### Background of the Invention

Active-matrix twisted nematic liquid crystal displays (abbreviated hereinafter to TN-LCDs) using TFT elements or MIM elements have widely spread as displays for note personal computers, portable TV sets, portable network terminals etc. by virtue of their pictures comparable to CRT when viewed from the front, in addition to characteristics inherent in LCDs, such as thin thickness, light weight, and low-energy consumption. However, with respect to conventional TN-LCDs, the problem of viewing angle i.e. change in colors when viewed obliquely or reduction in contrast ratio is essentially inevitable due to the optical anisotropy in liquid crystalline molecules, so there is strong demand for their improvements, and various attempts have been made therefor.

There are the following proposals, developments and attempts: a method of dividing one pixel and then changing the voltage applied to each pixel at constant rate (half tone gray scale method), a method of dividing one pixel and then changing the direction of liquid crystal molecules tilting in each pixel (multi domain method), a method of applying a lateral electric field to liquid crystals (IPS method), a method of driving vertically aligned liquid crystals (VA method), and a method of combining a bend orientation cell with an optical compensation plate (OCB method).

These methods achieve certain effects, but orientation films, electrodes and liquid crystalline orientation should be changed so that it is necessary to establish production techniques and install additional production facilities therefor, thus making production difficult and resulting in high costs.

On one hand, there is a method of widening an viewing angle by integrating an optical compensation film in conventional TN-LCD without changing the structure of TN-LCD. This method requires neither improvement nor installation of facilities for producing TN-LCDs, thus being superior in costs and advantageous in easy usability, so this method attracts attention and there are many proposals.

The reason for the problem of the viewing angle in TN-LCD in the normally white (NW) mode lies in the orientation of liquid crystals in the cell when indicated in black by application of voltage. In this state, the liquid crystals in the cell are oriented nearly perpendicularly to exhibit optically positive uniaxiality. Accordingly, it is proposed that a film exhibiting optically negative uniaxiality is used as an optical compensation film for widening a viewing angle in order to compensate for the positive uniaxiality when indicated in black on the liquid crystal cell. Further, in the view of the fact that even when indicated in black, the orientation of liquid crystals in a cell is tilted or parallel to the interface of the cell in the vicinity of the interface of an orientation film, it is also proposed that a negative uniaxial film with a tilted optical axis is used in compensation to improve the effect of widening the viewing angle.

For example, JP 4-349424A and JP 6-250166A propose an optical compensation film using a cholesteric film with a tilted helical axis as well as LCD using the same.

Further, JP 5-249547A and JP 6-331979A propose LCD using a negative uniaxiality compensator with a tilted optical axis, and as a specific embodiment a multi-layer thin film compensator is used. Further, JP 7-146409A and JP 8-5837A propose an optical compensation film with discotic liquid crystals oriented to be tilted as a negative uniaxiality compensation film with a tilted optical axis, as well as LCD using the same. As another form of the viewing angle compensation film, there is proposed an orientation film using a liquid crystalline polymer with positive uniaxiality. For example, JP 7-20434A proposes an compensation plate consisting of a liquid crystalline polymer film with twisted tilt orientation, and this film is used for widening the viewing angle of LCD.

In any cases, however, there is no effect of improving a contrast ratio for normal incidence by the compensation film and further the compensation film used has retardation in the face of the film, so there is the problem that the characteristics of the front of the liquid crystal display for normal incidence are deteriorated due to the dispersion of slow axis bearings in the face of the film at the time of manufacturing.

### Objects of the Invention

The object of the invention is to solve the above problems, and particularly the present invention relates to a liquid crystal display in which the slow axis bearing of a compensation film having retardation in the face of the film is arranged at a predetermined position. Specifically, the object of the invention is to provide a twisted nematic liquid crystal display having an improved contrast ratio for normal incidence and a higher contrast and wider viewing angle than ever without causing deterioration of the characteristics of the front of the liquid crystal display due to the dispersion of slow axis bearings in the compensation film.

### Summary of the Invention

The present invention relates to a liquid crystal display comprising at least one compensation film having retardation in the face of the film, a driving twisted nematic liquid crystal cell composed of a pair of transparent substrates provided with electrodes and nematic liquid crystal sandwiched between the substrates, and two polarizing plates arranged on the upper and lower sides of the liquid crystal cell, wherein the absorption axis or transmission axis of the polarizing plate is approximately parallel to the direction of orientation of the liquid crystal molecule on the liquid crystal cell substrate to which the polarizing plate is closest, and the angle between the slow axis bearing in the face of the compensation film and the absorption axis or transmission axis of the polarizing plate is in the range of 0.1 to 10°.

### Detailed Description of the Invention

Hereinafter, the present invention is described in more detail.

The driving twisted nematic liquid crystal cell (abbreviated hereinafter to TN liquid crystal cell) used in the present invention is classified in terms of driving system into the passive matrix system and the active matrix system using electrodes such as TFT (thin film transistor) electrodes, MIM (metal insulator metal, and TFD; thin film diode) electrodes as active elements. In the present invention, the liquid crystal display exhibiting an improved effect on contrast ratio for normal incidence arid a significantly improved effect on viewing angles can be obtained for a TN liquid crystal cell in any driving system by combining the liquid crystal cell with the compensation film described below.

In the present invention, the method of applying the driving voltage is not particularly limited. Usually, the method of applying voltage includes a method of directly applying voltage from an outer driving circuit to an electrode inside the cell substrate and a method of applying voltage by switching of a 2-terminal non-linear element or a 3-terminal active element arranged in the electrode. The 2-terminal non-linear element includes that utilizing a non-linear type with a volume using a ferroelectric body, diode showing a non-linear type of electrical resistance, MIM (metal insulator metal), barrister etc. The 3-terminal active element includes TFT (thin film transistor) formed on a cell substrate, MOS (metal-oxide semiconductor) array, SOS (silicon on sapphire) etc. In another method, the TN liquid crystal cell is provided outside with a discharge cell and the voltage generated by discharge is applied to the liquid crystal cell. In the present invention, any of the above methods can be used.

In the TN liquid crystal cell used in the present invention, the product (Δnd) of the optical anisotropy (Δn) of the nematic liquid crystals in the liquid crystal cell, multiplied by the thickness (d) of the liquid crystal layer in the liquid crystal cell, is preferably in the range of 300 nm to 500 nm. In the case of more than 500 nm, there is the possibility that the effect of the TN liquid crystal cell on the improvement of viewing angles upon combination with the compensation film described below may become inadequate. Further, the response rate may be decreased. On the other hand, in the case of less than 300 nm, the TN liquid crystal cell when combined with the compensation film has the effect of improving viewing angles, but there is the possibility that a reduction in brightness on the front may occur.

Further, it is preferable that the liquid crystalline molecules in the TN liquid crystal cell are previously given pre-tilt angles in order to reduce orientation defects in the nematic liquid crystalline molecules. It is preferable that the pre-tilt angles are usually 8° or less.

Further, the major axes of nematic liquid crystalline molecules in the TN liquid crystal cell are usually twisted at about 90° between the upper and lower substrates. With no voltage applied to the liquid crystal cell, incident linear polarized light goes out after twisted at 90° due to its optical rotation. Upon application of voltage to the liquid crystal cell, the major axes of the liquid crystalline molecules are oriented in the direction of the electric field, thus loosing the optical rotation. Accordingly, the twist angle of the TN liquid crystal cell used in the present invention is in the range of usually 70 to 110° , preferably 85 to 95° in order to secure this adequate effect of polarization. The direction of twisting of liquid crystalline molecules in the liquid crystal cell may be an either left or right direction.

The compensation film used in the present invention is an optical element having retardation in the face of the film. The retardation is in the range of preferably 5 to 300 nm, more preferably 10 to 200 nm. If the retardation is less than 5 nm, there is the possibility that an adequate effect may not be obtained, while a retardation of more than 300 nm causes a significant reduction in the margin for the angle of attachment of the film and is thus not preferable.

The optical element with retardation in the face of the film includes inorganic crystals such as quartz, calcite etc., polymer films, liquid crystalline films and the like. In the present invention, the polymer film and liquid crystalline film are preferable for easiness of handling, and in particular the liquid crystalline film is preferable for the effect of viewing angle characteristics.

The polymer film includes e.g. plastic films such as films of polyimide, polyamide imide, polyamide, polyether imide, polyether ether ketone, polyether ketone, polyketone sulfide, polyether sulfone, polysulfone, polyphenylene sulfide, polyphenylene oxide, polyethylene terephthalate, polybutylene terephthalate, polyethylene naphthalate, polyacetal, polycarbonate, polyarylate, acrylic resin, polyvinyl alcohol, polypropylene, cellulose-based plastics, epoxy resin, and phenol resin. Uniaxially oriented plastic films are also preferable.

The liquid crystal film can be obtained by converting an optically positive or negative uniaxial liquid crystalline substance into a film. As the liquid crystalline substance, any optically positive or negative uniaxial liquid crystalline compounds or liquid crystalline compositions can be used regardless of their molecular shapes such as rod, disk etc. or whether they are monomeric or polymeric substances.

As the monomeric liquid crystal, discotic liquid crystals represented by e.g. triphenylene derivatives and tolucsen derivatives can be mentioned as preferable examples in respect of the optical characteristics etc. of the resulting film. As the polymeric liquid crystal, main-chain type polymeric liquid crystals such as liquid crystalline polyester, polyamide, polycarbonate, polyester imide etc. or side-chain type polymeric liquid crystals such as polyacrylate, polymethacrylate, polymalonate, polysiloxane etc. can be mentioned. In particular, the polyester can be mentioned as preferable polymeric crystal in view of easiness of synthesis, orientation, glass transition point etc.

In the present invention, the liquid crystal film described above refers to a product obtained by converting the liquid crystalline substance into a film, whether the film may or may not show liquid crystal properties.

The liquid crystalline film can be obtained usually by techniques such as photo-crosslinking, thermal crosslinking or cooling to fix the state of orientation formed by the liquid crystalline substance in the state of liquid crystal. The present invention is not limited by the state of orientation formed by the liquid crystalline substance in the state of liquid crystal. The state of orientation includes e.g. cholesteric orientation, uniform tilt orientation, nematic hybrid orientation and discotic hybrid orientation. In the present invention, the liquid crystalline film having any orientation state fixed therein can be used as the compensation film, and in particular a liquid crystalline film having the nematic hybrid orientation or discotic hybrid orientation fixed therein is preferable.

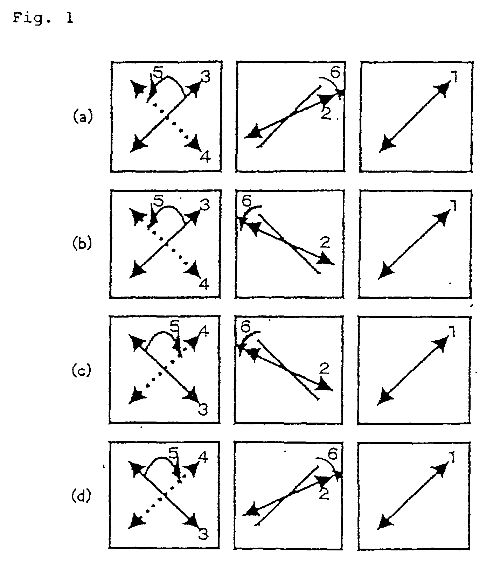

Now, the arrangement in which the above compensation film is combined with the TN liquid crystal cell previously described is specifically described. The position for arrangement of the compensation film may be between the polarizing plate and the TN liquid crystal cell, and one or more compensation films can be arranged. In the present invention, the direction of rotation of slow axis of the compensation film is determined depending on the relationship among the twisted direction of the liquid crystal cell, the direction of orientation of the liquid crystalline molecule in the liquid crystal cell substrate, and the slow axis of the compensation film. Specifically, the absorption axis or transmission axis of the polarizing plate is approximately parallel to the direction of orientation of the liquid crystal molecule on the liquid crystal cell substrate closest to the polarizing plate, and the angle between the slow axis of the compensation film and the absorption axis or transmission axis of the polarizing plate to which the compensation film is closest is arranged at a predetermined angle in a normal direction (or in a reverse direction) if the slow axis of the compensation film is nearly perpendicular to (or nearly parallel to) the direction of orientation of the nematic liquid crystal molecule in the liquid crystal cell substrate to which the polarizing plate is closest, that is, the direction of orientation of the nematic liquid crystal molecule rotating toward the inside of the cell and being present on the liquid crystal cell substrate to which the polarizing plate when viewed from the polarizing plate. The predetermined angle is in the range of usually 0.1 to 10° , preferably 0.2 to 8° , more preferably 0.5 to 6° , most preferably 1 to 4° , although it varies depending on the retardation in the face of the compensation film used, the cell gap of the driving cell, twisted angle, pre-tilt, application voltage, the elastic constant of the nematic liquid crystal constituting the TN liquid crystal cell and the like. A predetermined angle outside of the range is not preferable because of a possible reduction in the contrast ratio for normal incidence. In the arrangement described above, the relationship among the absorption axis or transmission axis of the polarizing plate, the direction of orientation of the nematic liquid crystal molecule constituting the TN liquid crystal cell, and the slow axis of the compensation film is shown in Fig. 1.

In the liquid crystal display of the invention, it is practically preferable to conduct compensation by means of one or two compensation films. Although compensation is also feasible by three or more compensation films, such compensation leads to high costs and is thus not preferable. The specific position for the arrangement is as follows. However, the following is a typical example, and is not intended to limit the present invention.

First, the arrangement of one compensation film is described. The compensation film is arranged between the polarizing plate and the TN liquid crystal cell, and the compensation film may be placed in the side of the upper face or the lower face of the liquid crystal cell. This arrangement is made such that the absorption axis or transmission axis of the polarizing plate is approximately parallel to the direction of orientation of the liquid crystal molecule on the liquid crystal cell substrate closest to the polarizing plate, and the angle between the slow axis of the compensation film and the absorption axis or transmission axis of the polarizing plate is arranged at a predetermined angle in a normal direction (or in a reverse direction) if the slow axis of the compensation film is nearly perpendicular to (or nearly parallel to) the direction of orientation of the nematic liquid crystal molecule in the liquid crystal cell substrate to which the polarizing plate is closest, that is, the direction of orientation of the nematic liquid crystal molecule rotating toward the inside of the cell and being present on the liquid crystal cell substrate to which the polarizing plate when viewed from the polarizing plate.

Now, the arrangement of two compensation films is described. For arrangement of the two compensation films, the films may be arranged in the same side; for example the two films may be arranged either between the TN liquid crystal cell and the upper polarizing plate or between the liquid crystal cell and the lower polarizing plate. Alternatively, one film may be arranged between the TN liquid crystal cell and the upper polarizing plate and another film between the liquid crystal cell and the lower polarizing plate. The two compensation films may be those having the same or different optical parameters.

The arrangement of two compensation films wherein one between the TN liquid crystal cell and the upper polarizing plate and another between the TN liquid crystal cell and the lower polarizing plate is described. In this arrangement, one compensation film is arranged in the same manner as in the above-described arrangement of one compensation film. That is, this arrangement is made such that the absorption axis or transmission axis of each polarizing plate is approximately parallel to the direction of orientation of the liquid crystal molecule on the liquid crystal cell substrate closest to the polarizing plate, and the angle between the slow axis of each compensation film and the absorption axis or transmission axis of each polarizing plate is arranged at a predetermined angle in a normal direction (or in a reverse direction) if the slow axis of the compensation film is nearly perpendicular to (or nearly parallel to) the direction of orientation of the nematic liquid crystal molecule on the liquid crystal cell substrate to which the film is closest, that is, the direction of orientation of the liquid crystal molecule rotating toward the inside of the cell and being present on the TN liquid crystal cell substrate to which the polarizing plate when viewed from the polarizing plate.

Now, the arrangement of two compensation films between the TN liquid crystal cell and either the upper or lower polarizing plate is described. Here, the compensation film arranged closest to the TN liquid crystal cell is designated film 1, and the compensation film arranged between film 1 and the upper or lower polarizing plate is designated film 2. In this arrangement, film 1 arranged closest to the TN liquid crystal cell is arranged in the same manner as in the arrangement of 1 compensation film described above. That is, this arrangement is made such that the absorption axis or transmission axis of each polarizing plate is approximately parallel to the direction of orientation of the liquid crystal molecule on the liquid crystal cell substrate closest to the polarizing plate, and the angle between the slow axis of film 1 and the absorption axis or transmission axis of the polarizing plate is arranged at a predetermined angle in a normal direction (or in a reverse direction) if the slow axis of the compensation film is nearly perpendicular to (or nearly parallel to) the direction of orientation of the liquid crystal molecule on the liquid crystal cell substrate to which the film is closest, that is, the direction of orientation of the liquid crystal molecule rotating toward the inside of the cell and being present on the liquid crystal cell substrate to which the polarizing plate when viewed from the polarizing plate. Then, the arrangement of film 2 arranged between the film 1 and the upper or lower polarizing plate is made such that the angle between the slow axis of film 2 and the absorption axis or transmission axis of the polarizing plate is arranged at a predetermined angle in a normal direction (or in a reverse direction) if the slow axis of film 2 is nearly perpendicular to (or nearly parallel to) the direction of orientation of the liquid crystal molecule in the liquid crystal cell substrate to which the polarizing plate is closest, that is, the direction of orientation of the liquid crystal molecule rotating toward the inside of the cell and being present on the liquid crystal cell substrate to which the polarizing plate when viewed from the polarizing plate. In the arrangement described above, the position for arrangement of film 1 may be exchanged with that of film 2.

As described above, the compensation film having retardation in the face of at least one film is arranged such that the slow axis of the film is arranged in the predetermined angle, whereby the liquid crystal display having high contrasts and wide viewing angles can be obtained.

### Brief Description of the Drawings

Fig. 1 shows the direction of rotation of the slow axis of the compensation film in the present invention (viewed from the side of the polarizing plate).
Fig. 2 shows the arrangement of each optical element in Examples 1, 2 and 3.
Fig. 3 shows the arrangement of the axis of each optical element in Examples 1, 2 and 3.
Fig. 4 shows the viewing angle characteristics (horizontal direction) of the contrast in Example 1 and Comparative Example 1.
Fig. 5 shows the viewing angle characteristics (horizontal direction) of the contrast in Example 2 and Comparative Example 1.
Fig. 6 shows the viewing angle characteristics (vertical direction) of the contrast in Example 2 and Comparative Example 1.
Fig. 7 shows the viewing angle characteristics (horizontal direction) of the contrast in Example 3 and Comparative Example 1.
Fig. 8 shows the viewing angle characteristics (horizontal direction) of the contrast in Comparative Example 2 and Comparative Example 1.
Fig. 9 shows the viewing angle characteristics (horizontal direction) of the contrast in Comparative Example 3 and Example 3.

In Fig. 1:
1 is the absorption angle or transmission axis of the polarizing plate;
2 is the slow axis of the compensation film;
3 is the direction of orientation of a liquid crystal molecule at the side of attachment of the film to the liquid crystal cell;
4 is the direction of orientation of a liquid crystal molecule at the opposite side to the side of attachment of the film to the liquid crystal cell;
5 is the direction of rotation of a liquid crystal molecule;
6 is the direction of rotation of the slow axis of the viewing angle compensation film;
   (a) is the case where in the left twisted cell, the axis of orientation of the liquid crystal molecule is nearly parallel to the slow axis of the compensation film;
   (b) is the case where in the left twisted cell, the axis of orientation of the liquid crystal molecule is nearly perpendicular to the slow axis of the compensation film;
   (c) is the case where in the right twisted cell, the axis of orientation of the liquid crystal molecule is nearly parallel to the slow axis of the compensation film; and
   (d) is the case where in the right twisted cell, the axis of orientation of the liquid crystal molecule is nearly perpendicular to the slow axis of the compensation film.

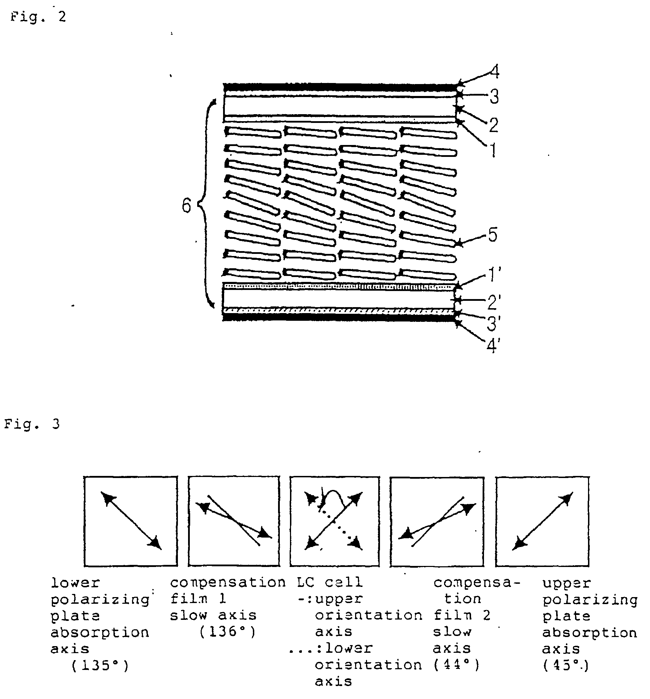

In Fig. 2:
1, 1' are electrodes;
2, 2' are transparent substrates;
3, 3' are compensation films;
4, 4' are polarizing plates;
5 is a liquid crystal molecule; and
6 is a liquid crystal cell.

### Examples

Hereinafter, the present invention is described by reference to the Examples, which however are not intended to limit the present invention.

### Example 1

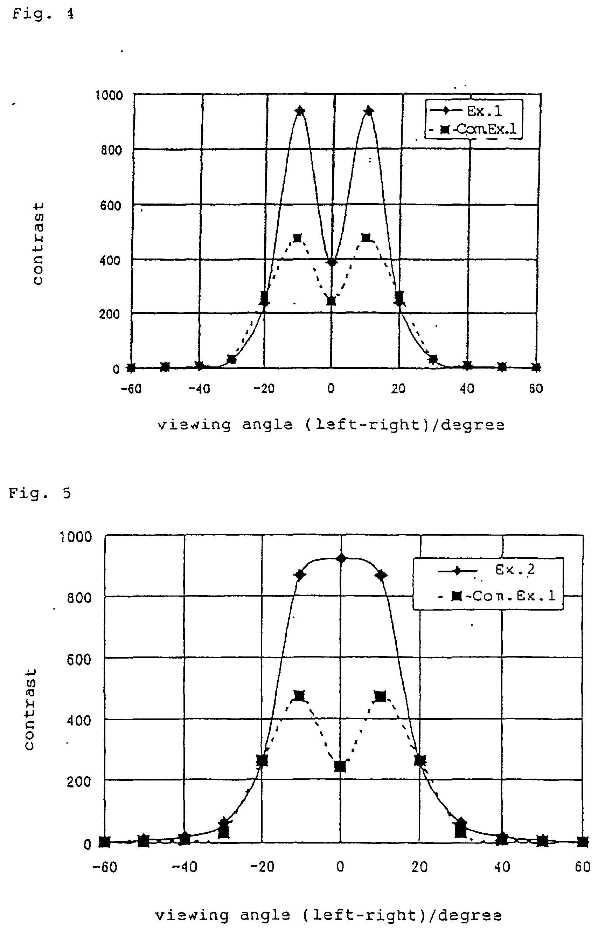

A TN liquid crystal cell with a cell gap of 4.8 µm, Δnd 470 nm, and a twisted angle of 90° (left twist) was constructed using ZLI-4792 as the liquid crystal material, and two polycarbonate films having a retardation of 50 nm in the face of the film were arranged respectively on the upper and lower sides of the TN liquid crystal cell, as shown in the arrangement in Figs. 2 and 3. The angle between the slow axis of the polycarbonate film and the transmission axis of the polarizing plate was set as 1° . Voltage (square wave at 300 Hz) was applied to the TN liquid crystal cell. The driving voltage was set at 0 V for indication in white and at 6 V for indication in black. The TN liquid crystal cell arranged as shown in Figs. 1 and 2 was measured for transmittance in every bearing by use of FEP optical system DVS-3000 (Hamamatsu Photonics K. K.) to evaluate the viewing angle characteristics of the contrast. The results are shown in Fig. 4. The front contract was improved and the viewing angle characteristics of a contrast of up to 20° in a horizontal direction were improved, as compared with the one not using the film.

### Example 2

A solution of 5 wt% liquid crystalline polyester of formula (1) in tetrachloroethane was prepared. This solution was applied by spin coating onto a glass plate having a rubbing polyimide film, and the solvent was removed. Then, it was thermally treated at 250 °C for 30 minutes. After thermal treatment, it was cooled so that the orientation of the liquid crystalline polyester was fixed. The resulting film consisting of the liquid crystalline polyester on the glass substrate had nematic hybrid orientation, was transparent, free of orientation defects, and uniform in thickness (0.60 µm). The average tilt angle of the film was 35° . 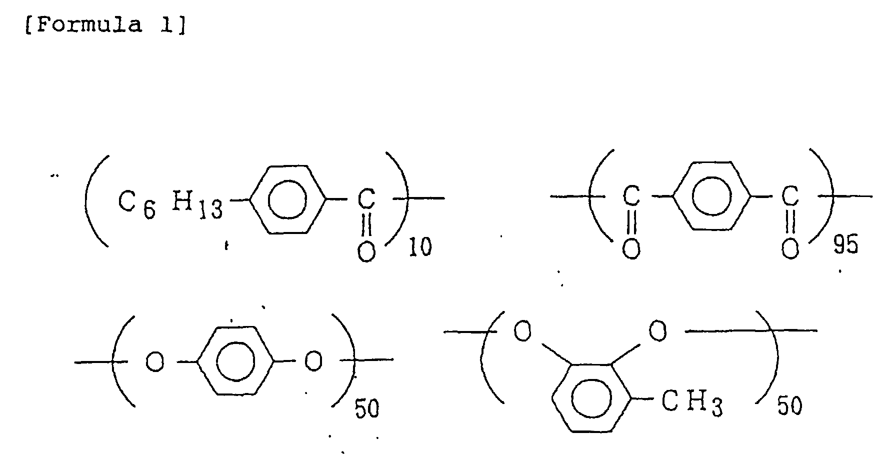 wherein the numbers affixed to parentheses indicate molar composition ratio.

The resulting two films formed on the glass substrate having a rubbing polyimide film were arranged respectively on the upper and lower sides of a TN liquid crystal cell, as shown in the arrangement in Figs. 2 and 3. The films arranged on the upper and lower sides of the TN liquid crystal cell were arranged such that both the films at the side of the glass substrate were made close to the cell substrate. The angle between the slow axis of the film and the transmission axis of the polarizing plate was set at 2° .

Voltage (square wave at 300 Hz) was applied to this liquid crystal cell. The driving voltage was set at 0 V for indication in white and at 6 V for indication in black.

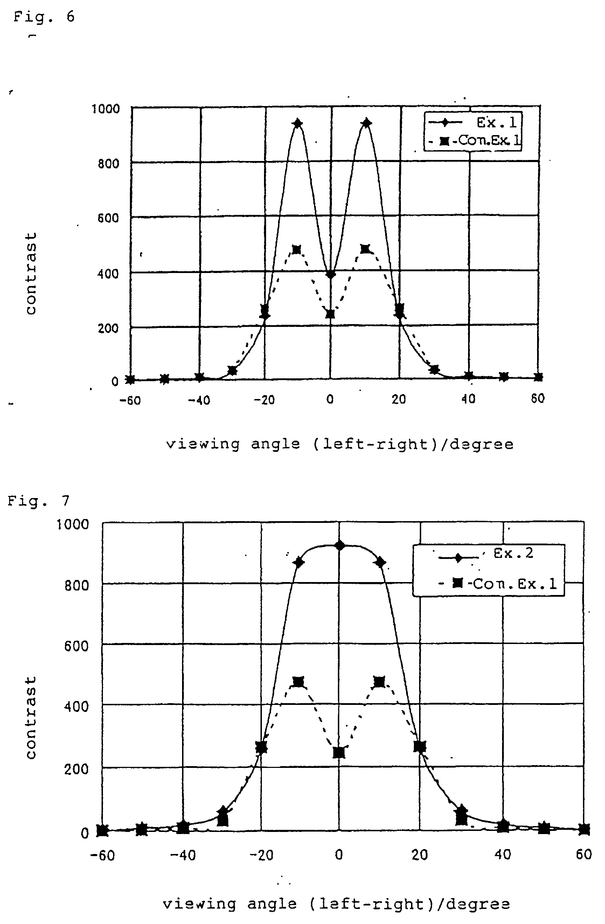

The TN liquid crystal cell provided with the films was measured for transmittance in every bearing by use of FEP optical system DVS-3000 (Hamamatsu Photonics K.K.) to evaluate the viewing angle characteristics of the contrast. The results are shown in Figs. 5 and 6. As compared with the one not using the film, the contract ratio for normal incidence was improved, and the viewing angle characteristics of the contrast were improved at an angle of up to 20° in a horizontal direction and in a nearly whole region in a vertical direction.

### Example 3

0.4 g of the photopolymerization initiator Irgacure 907 (CHIBA-GEIGY) was added to 10 g of the discotic liquid crystal compound of formula (2) followed by adding 40 g of triethylene glycol dimethyl ether to prepare a coating solution. This solution was applied by roll coating onto a glass plate having a rubbing polyimide film, then dried on a hot plate at 80 °C, and thermally treated in an oven at 140 °C for 10 minutes. After removed from the oven and cooled at room temperature, it was irradiated with light from a high-pressure mercury lamp at room temperature to give photo-crosslinked film 1. The amount of the exposure light was 600 mJ/cm². The resulting film consisting of the discotic liquid crystal compound on the glass substrate had discotic hybrid orientation, was transparent, free of orientation defects, and uniform in thickness (1.30 µm). The average tilt angle of the film was 45° . 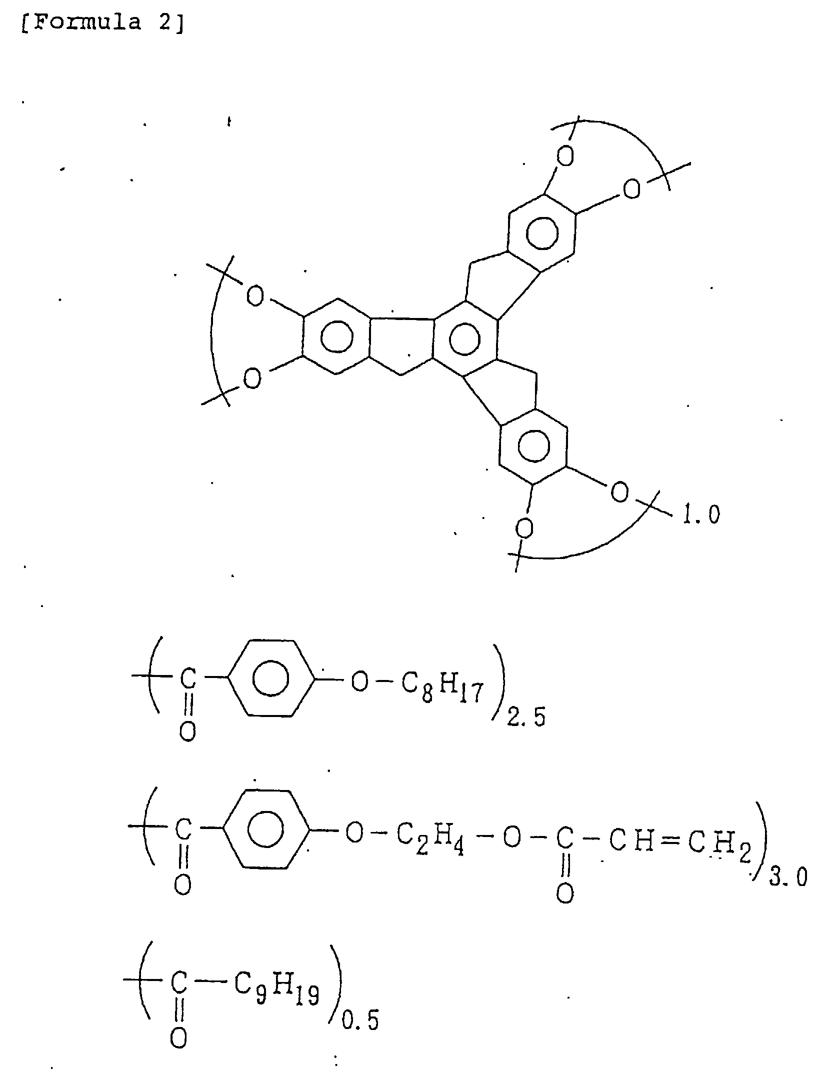 wherein the numbers affixed to parentheses indicate molar composition ratio.

The resulting two films formed on the glass substrate having a rubbing polyimide film were arranged respectively on the upper and lower sides of a TN liquid crystal cell, as shown in the arrangement in Figs. 2 and 3. The films arranged on the upper and lower sides of the TN liquid crystal cell were arranged such that both the films at the side of the glass substrate were made close to the cell substrate. The angle between the slow axis of the film and the transmission axis of the polarizing plate was set at 4°.

Voltage (square wave at 300 Hz) was applied to this liquid crystal cell. The driving voltage was set at 0 V for indication in white and at 6 V for indication in black.

The TN liquid crystal cell provided with the films was measured for transmittance in every bearing by use of FEP optical system DVS-3000 (Hamamatsu Photonics K. K.) to evaluate the viewing angle characteristics of the contrast. The results are shown in Fig. 7. The contract ratio for normal incidence was improved and the viewing angle characteristics of a contrast at an angle of up to 20° in a horizontal direction were improved as compared with the one not using the film and even with the one using the film but having the slow axis not rotated.

### Comparative Example 1

The characteristics of the TN liquid crystal cell were evaluated in the same manner except as above that the same liquid crystal cell as in Examples 1 to 3 was used and no compensation film was used. The TN liquid crystal cell was measured for transmittance in every bearing by use of FEP optical system DVS-3000 (Hamamatsu Photonics K. K.) to evaluate the viewing angle characteristics of the contrast.

### Comparative Example 2

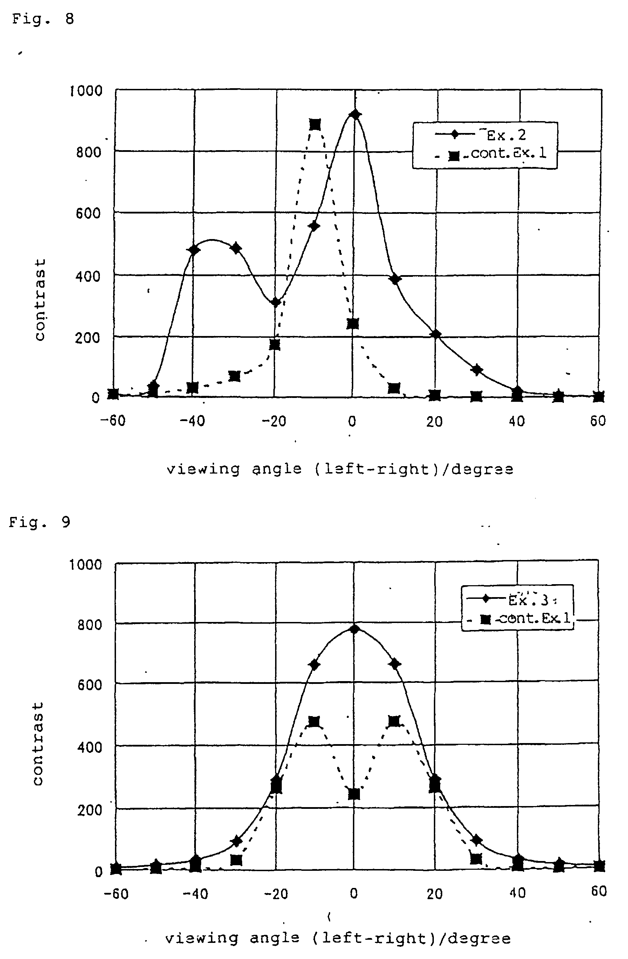

The viewing angle of the contrast was evaluated in the same manner as above except that the same liquid crystal cell and the same compensation film as in Example 1 were used and the direction of rotation of the slow axis of the compensation film was reversed. The result is shown in Fig. 8. The contrast ratio for normal incidence of the cell was lowered as compared with the one not using the film and the viewing angle characteristics of a contrast at an angle of up to 20° in a horizontal direction were worsened.

### Comparative Example 3

The viewing angle of the contrast was evaluated in the same manner as above except that the same liquid crystal cell and the same compensation film as in Example 3 were used and the angle between the slow axis of the compensation film and the transmission axis of the polarizing plate was set at 0° . The result is shown in Fig. 9. As compared with Example 3, the contrast ratio for normal incidence of the cell was lowered and the viewing angle characteristics of a contrast at an angle of up to 20° in a horizontal direction were worsened.

## Claims

1. A liquid crystal display comprising at least one compensation film having retardation in the face of the film, a driving twisted nematic liquid crystal cell composed of a pair of transparent substrates provided with electrodes and nematic liquid crystal sandwiched between the substrates, and two polarizing plates arranged on the upper and lower sides of the liquid crystal cell, wherein the absorption axis or transmission axis of the polarizing plate is approximately parallel to the direction of orientation of the liquid crystal molecule on the liquid crystal cell substrate closest to the polarizing plate, and the angle between the slow axis bearing in the face of the compensation film and the absorption axis or transmission axis of the polarizing plate is in the range of 0.1 to 10° .

2. A liquid crystal display according to claim 1 wherein the compensation film is a monomeric or polymeric liquid crystal film having cholesteric orientation fixed therein.

3. A liquid crystal display according to claim 1 wherein the compensation film is a monomeric or polymeric liquid crystal film having uniform tilt orientation fixed therein.

4. A liquid crystal display according to claim 1 wherein the compensation film is a monomeric or polymeric liquid crystal film having nematic hybrid orientation fixed therein.

5. A liquid crystal display according to claim 1 wherein the compensation film is a monomeric or polymeric liquid crystal film having twisted nematic hybrid orientation fixed therein.

6. A liquid crystal display according to claim 1 wherein the compensation film is a discotic liquid crystal film having discotic hybrid orientation fixed therein.

7. A liquid crystal display according to claim 1 wherein the compensation film is a discotic liquid crystal film having twisted discotic hybrid orientation fixed therein.
